# FASCICULE DE BREVET EUROPEEN

(11) **EP 3 152 014 B1**
(45) Date de publication et mention de la délivrance du brevet: **25.07.2018**
(21) Numéro de dépôt: 15729385.3
(22) Date de dépôt: 05.06.2015
(51) Int. Cl.: B25J 19/00, B62D 57/032, F16D 49/20

(54) **ARTICULATION MOTORISÉE SÉCURISÉE DESTINÉE À ÉQUIPER UN ROBOT À CARACTÈRE HUMANOÏDE**
MOTORGETRIEBENES SICHERHEITSGELENK FÜR EINEN HUMANOIDEN ROBOTER
SECURE, MOTOR-DRIVEN JOINT TO BE PROVIDED ON A HUMANOID ROBOT

(30) Priorité: 05.06.2014 FR 1455092
(43) Date de publication de la demande: 12.04.2017
(73) Titulaire: Softbank Robotics Europe, 75015 Paris (FR)
(72) Inventeur: CLERC, Vincent, F-92140 Clamart (FR); HOUCHU, Ludovic, F-75015 Paris (FR); CHEVRY, Vincent, F-75015 Paris (FR)
(74) Mandataire: Collet, Alain
(86) Numéro de dépôt international: PCT/EP2015/062621
(87) Numéro de publication internationale: WO 2015/185748

(56) Documents cités:
- EP-A1- 0 176 204
- JP-A- 2011 251 057
- US-A- 4 693 665
- US-A1- 2013 039 730

## Description

L'invention concerne une articulation motorisée sécurisée destinée à être montée entre deux membres d'un robot à caractère humanoïde, telle que définie dans le préambule de la revendication 1.

Une telle articulation est connue du document JP-A-2011 251057.

Elle est sécurisée au moyen d'un frein activé par défaut par effet ressort, un actionneur permettant de désactiver le frein et libérer le fonctionnement de l'articulation.

Le corps humain comprend un très grand nombre d'articulations assurant la jonction entre des os ou des membres du corps. On dénombre par exemple environ quarante articulations dans un membre inférieur humain, de la hanche à la cheville. Ces articulations sont mobiles au moyen de muscles, et présentent des formes diverses pour permettre des mouvements variés. De nombreuses tentatives ont été réalisées dans des robots à caractère humanoïde pour reproduire au mieux le comportement et les mouvements de l'être humain. On connait divers types d'articulations capables d'entrainer en mouvement au moyen d'un moteur électrique un membre par rapport à un autre selon un ou plusieurs degrés de liberté.

Une situation délicate est celle d'une coupure d'alimentation électrique pouvant par exemple intervenir suite à une mise en défaut informatique ou une perte de charge batterie. L'entrainement par le moteur électrique étant interrompu, l'articulation se trouve libre et le robot est susceptible de chuter. Cette situation est d'autant plus délicate que le robot est de grande taille et de masse élevée. Dans la perspective d'un usage répandu et par tout public, on cherche à améliorer la sureté d'utilisation des robots humanoïdes.

Le document JP-A-2011 251057 décrit une unité d'assistance comprenant un support fixé sur un corps humain, un moteur, un élément rotatif, un cliquet, une griffe de verrouillage, un actionneur de cliquet et un contrôleur. Le contact d'engrènement entre la griffe de verrouillage et le cliquet implique obligatoirement un arrêt abrupt de la rotation du cliquet, et non pas un freinage, ce qui n'est pas toujours souhaité.

L'invention vise à apporter une solution à cette situation particulière d'une coupure d'alimentation, dans le but d'améliorer la sureté d'utilisation des robots humanoïdes, en particulier des robots de grande taille, et faire face aux exigences réglementaires émergentes en la matière.

A cet effet, l'invention a pour objet une articulation motorisée sécurisée selon la revendication 1. Avantageusement, le frein de cette articulation motorisée sécurisée est configuré pour empêcher le mouvement de la partie mobile du moteur par rapport à la partie fixe du moteur jusqu'à un effort seuil prédéterminée ; un effort supérieur audit effort seuil exercé entre la partie mobile et la partie fixe du moteur générant un mouvement de la partie mobile par rapport à la partie fixe.

Avantageusement, le frein comprend :
- un bras fixe solidaire du socle,
- un bras mobile relié par une première extrémité au bras fixe au moyen d'une liaison pivot d'axe sensiblement parallèle à l'axe principal de l'arbre, le patin étant fixé sur le bras mobile,
- un ressort hélicoïdal enroulé autour de l'axe de la liaison pivot et prenant appui d'une part sur le bras fixe et d'autre part sur le bras mobile de manière à exercer un effort tendant à écarter le bras mobile et le bras fixe.

Avantageusement, le frein comprend :
- un bras fixe solidaire du socle,
- un bras mobile relié par une première extrémité au bras fixe au moyen d'une liaison pivot d'axe sensiblement parallèle à l'axe principal de l'arbre, le patin étant fixé sur une plaquette montée sur rotule sur le bras mobile,
- un ressort hélicoïdal enroulé autour de l'axe de la liaison pivot et prenant appui d'une part sur le bras fixe et d'autre part sur le bras mobile de manière à exercer un effort tendant à écarter le bras mobile et le bras fixe.

Avantageusement, l'actionneur est un actionneur linéaire comprenant un fourreau solidaire du socle et une tige, mobile en translation dans le fourreau, et reliée à une seconde extrémité du bras mobile ; l'actionneur linéaire étant configuré pour permettre de déplacer le bras mobile en rotation par rapport au bras fixe, en s'opposant à l'effet ressort, par translation de la tige dans le fourreau.

Avantageusement, l'articulation est configurée de sorte que le bras mobile présente une forme en demi-lune entre sa première et sa seconde extrémités, formant un demi-couvercle recouvrant partiellement la cloche.

Avantageusement, l'articulation comprend un dispositif à engrenages entrainé par la partie mobile du moteur et destiné à être relié au second membre.

Avantageusement, l'articulation comprend des moyens pour permettre de déplacer le frein par une intervention manuelle.

Avantageusement, l'articulation comprend des moyens de mesure capable de détecter un déplacement du frein.

L'invention porte aussi sur un robot à caractère humanoïde comprenant une articulation motorisée ayant les caractéristiques précédemment décrites.

Avantageusement, le robot comprend un membre s'apparentant à une cuisse et un membre s'apparentant à un torse, articulés par une articulation telle que précédemment décrit.

Avantageusement, le robot comprend un membre s'apparentant à une jambe et un membre s'apparentant à une cuisse, articulés par une articulation telle que précédemment décrit.

L'invention sera mieux comprise et d'autres avantages apparaîtront à la lecture de la description détaillée d'un mode de réalisation donné à titre d'exemple sur les figures suivantes.
Les figures 1a et 1b représentent deux exemples de robots humanoïdes pouvant être équipés d'une articulation sécurisée selon l'invention,
les figures 2a et 2b représentent selon une première vue en perspective un premier exemple d'articulation sécurisée, respectivement dans une position sécurisée et une position opérationnelle,
les figures 3a, 3b et 3c représentent en vue de dessus l'exemple d'articulation sécurisée, respectivement dans la position sécurisée, la position opérationnelle, et dans les deux positions superposées,
les figures 4a et 4b représentent selon une seconde vue en perspective l'exemple d'articulation sécurisée, respectivement dans la position opérationnelle et la position sécurisée,
les figures 5a et 5b représentent selon une troisième vue en perspective l'exemple d'articulation sécurisée, respectivement dans la position opérationnelle et la position sécurisée,
la figure 6 représente en vue de dessous un second exemple d'articulation sécurisée.

Par souci de clarté, les mêmes éléments porteront les mêmes repères dans les différentes figures.

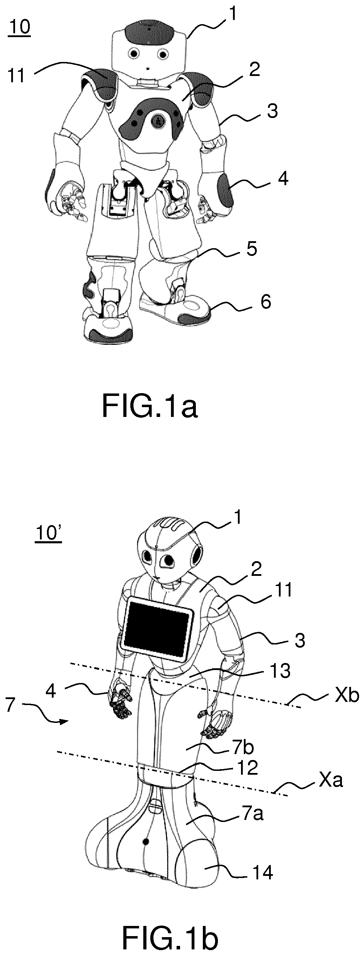

Les **figures 1a et 1b** représentent deux exemples de robots humanoïdes développés par la société ALDEBARAN ROBOTICS™. Le robot humanoïde 10 représenté en figure 1a comprend une tête 1, un torse 2, deux bras 3, deux mains 4, deux jambes 5 et deux pieds 6. Le robot humanoïde 10' représenté en figure 1b comprend une tête 1, un torse 2, deux bras 3, deux mains 4 et une jupe 7. Ces deux robots comprennent plusieurs articulations autorisant le mouvement relatif des différents membres du robot dans le but de reproduire la morphologie humaine et ses mouvements. Les robots 10 et 10' comprennent par exemple une articulation 11 entre le torse 2 et chacun des bras 3. L'articulation 11 est motorisée autour de deux axes de rotation pour permettre de déplacer le bras 3 par rapport au torse 2 à la manière des déplacements possibles par une épaule d'un être humain.

Le robot humanoïde 10 comprend également plusieurs articulations pour mettre en mouvement les jambes du robot et reproduire le mouvement de la marche, en particulier des articulations assimilables à une hanche, entre le torse et la cuisse, à un genou, entre la cuisse et la jambe, et à une cheville entre la jambe et le pied. Plusieurs formes d'articulations motorisées sont mises en oeuvre, entrainant en mouvement l'un des membres autour d'un ou plusieurs degrés de liberté en rotation.

Le robot humanoïde 10' présente une architecture différente. Pour améliorer la stabilité et abaisser le centre de gravité du robot, le robot ne comprend pas de jambe mais une jupe 7 comprenant en sa base un tripode 14 capable de déplacer le robot. La jupe comprend aussi une première articulation 12 s'apparentant à un genou, entre une jambe 7a et une cuisse 7b. Une deuxième articulation 13 s'apparentant à une hanche est montée entre le torse 2 et la cuisse 7b. Ces deux articulations 12 et 13 sont des liaisons pivots motorisées autour d'un axe de rotation. L'axe de rotation Xa de l'articulation 12 et l'axe de rotation Xb de l'articulation 13 sont sensiblement parallèles à un axe reliant les deux épaules du robot, permettant d'incliner le robot vers l'avant ou vers l'arrière.

Le robot humanoïde 10' en position debout mesure environ 1.1 à 1.2 mètre pour une masse totale d'environ 25 à 30 kg. On cherche à s'assurer que la partie haute du robot ne puisse pas entrainer en rotation l'articulation sous l'effet de son propre poids. L'articulation sécurisée selon l'invention a pour but d'empêcher la chute de la partie haute du robot, par exemple de la cuisse jusqu'à la tête par rotation autour de l'articulation 12, même en cas de coupure d'alimentation électrique de l'articulation. Plus précisément, l'articulation selon l'invention permet de bloquer la rotation des articulations lorsque la partie haute du robot est à l'intérieur d'un cône d'axe vertical et d'angle de l'ordre de 10 degrés.

L'invention est décrite dans la suite pour une articulation motorisée à un degré de liberté de type liaison pivot, mise en oeuvre dans un robot de grande taille semblable au robot humanoïde 10', et en particulier pour une articulation assimilable à un genou ou une hanche. Il est bien entendu que l'invention ne se limite pas à cette application particulière. Plus généralement, l'articulation selon l'invention est destinée à être montée entre un premier et un second membres d'un robot, tel qu'un robot à caractère humanoïde, un robot à caractère animal ou même un robot industriel. Le premier et le second membres sont d'une manière générale des sous-ensembles mécaniques que l'on cherche à déplacer l'un par rapport à l'autre. Par membre, on entend dans la suite un sous-ensemble mécanique du robot tel qu'une jambe, une cuisse, un torse, une tête, un bras, une main, ou une combinaison de ceux-ci. Notons encore que si les figures suivantes détaillent un exemple particulier d'une articulation de type liaison pivot à un degré de liberté, il est entendu que l'invention s'applique en principe à tout type d'articulations, par exemple une articulation à deux degrés de liberté en rotation, ou encore une articulation à un ou plusieurs degrés de liberté en translation. D'une manière générale, l'invention porte sur une articulation comprenant un moteur capable de déplacer un second membre par rapport à un premier membre.

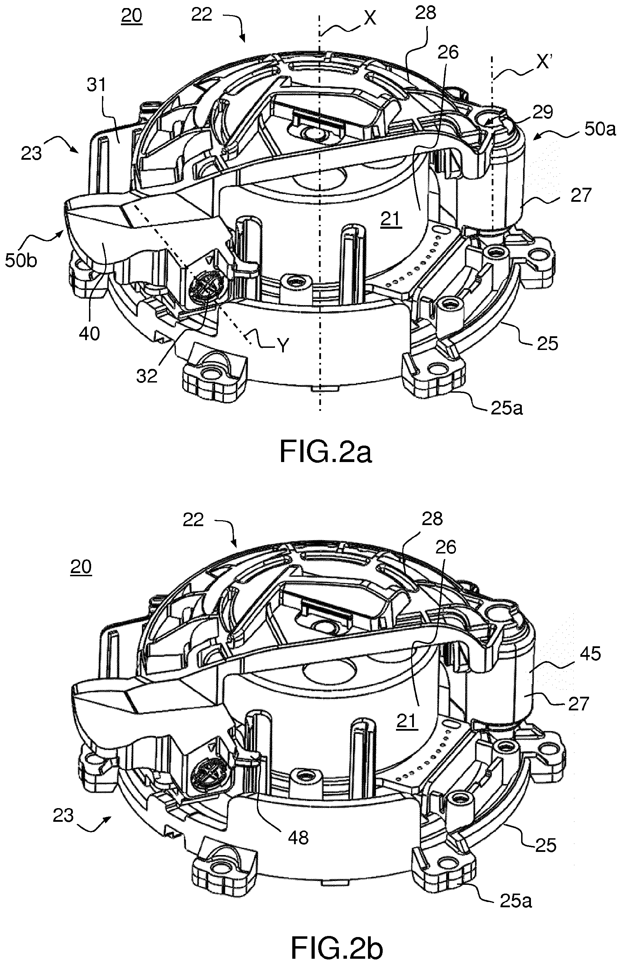

Les **figures 2a et 2b** représentent selon une première vue en perspective un exemple d'articulation sécurisée, respectivement dans une position sécurisée et une position opérationnelle. L'articulation 20 est destinée à être montée entre un premier et un second membres non représentés sur les figures. L'articulation 20 comprend :
- un moteur 21 capable d'entrainer en mouvement le second membre par rapport au premier membre, le moteur comprenant une partie fixe destinée à être reliée au premier membre et une partie mobile entrainable en mouvement par rapport à la partie fixe et destinée à être reliée au second membre,
- un frein 22 capable d'exercer un effort sur la partie mobile du moteur 21 par effet ressort, pour empêcher le mouvement de la partie mobile par rapport à la partie fixe,
- un actionneur 23 capable de déplacer le frein 22 en s'opposant à l'effet ressort, de sorte à libérer la partie mobile du moteur 21 de l'effort du frein et permettre au moteur 21 d'entrainer en mouvement la partie mobile par rapport à la partie fixe.

Le moteur 21 est préférentiellement un moteur rotatif électrique, comprenant un socle moteur 25 et un arbre entrainable en rotation par rapport au socle 25 autour d'un axe X. Le socle moteur 25 forme la partie fixe du moteur et comprend une base en forme de disque destinée à être fixée au premier membre du robot au moyen de six pattes de fixation 25a réparties angulairement autour de la base du socle. L'arbre (non visible sur les figures) forme la partie mobile du moteur et est solidaire d'une cloche moteur 26 de forme sensiblement cylindrique. L'arbre traverse le socle moteur et est destinée à être relié au second membre préférentiellement par l'intermédiaire d'un dispositif à engrenages (non représenté). Ainsi configuré, le moteur électrique 21 permet d'entrainer l'arbre en rotation par rapport au socle, entrainant en rotation le second membre par rapport au premier membre.

L'articulation 20 comprend aussi le frein 22. Sur la figure 2a, l'articulation est représentée dans une position sécurisée, dans laquelle le frein exerce un effort sur la partie mobile du moteur pour empêcher l'entrainement en rotation de l'arbre. Sur la figure 2b, l'articulation est représentée dans une position opérationnelle, dans laquelle le frein est déplacé de sorte à libérer le moteur de l'effort de freinage et permettre l'entrainement en rotation de l'arbre. En position sécurisée, le frein 22 exerce un effort sur la cloche moteur 21 préférentiellement constitué d'un matériau métallique, par l'intermédiaire d'un patin préférentiellement constitué d'un matériau élastomère, venant en contact de la cloche cylindrique le long d'une section radiale de celle-ci. Le patin exerce un effort sur la cloche moteur de sorte à empêcher par friction la rotation de l'arbre par rapport au socle.

Dans l'exemple représenté, le frein 22 comprend un bras fixe 27 solidaire du socle moteur 25 et un bras mobile 28. Le bras mobile 28 présente une forme en demi-lune entre une première extrémité 50a et une seconde extrémité 50b, formant un demi-couvercle recouvrant partiellement la cloche moteur. Le bras mobile 28 est relié par la première extrémité 50a au bras fixe 27 au moyen d'une liaison pivot 29 d'axe X' sensiblement parallèle à l'axe X de rotation de l'arbre. Dans ce premier exemple d'articulation, le patin est fixé sur une surface interne du bras mobile, de sorte à venir en contact de la surface radiale de la cloche 26, lors d'une rotation du bras mobile autour de son axe X'. Le patin est fixé sensiblement à égale distance de la première et de la seconde extrémités 50a et 50b du bras mobile 28. Le frein 22 comprend aussi un mécanisme à ressort, préférentiellement un ressort hélicoïdal 45 enroulé autour de l'axe X' et prenant appui sur le bras fixe 27 et sur le bras mobile 28 de manière à exercer un effort tendant à écarter le bras mobile et le bras fixe. L'effort exercé par le ressort entre le bras mobile et le bras fixe, est transmis au patin en contact de la cloche, permettant de bloquer l'arbre en rotation. Par défaut, l'articulation est bloquée en rotation.

L'articulation comprend également un actionneur 23 capable de déplacer le frein en s'opposant à l'effet ressort, de sorte à libérer le moteur de l'effort du frein et permettre au moteur d'entrainer l'arbre en rotation. Dans l'exemple représenté, un actionneur linéaire (non représenté) est monté entre le bras fixe 27 et la seconde extrémité 50b du bras mobile 28. L'actionneur linéaire comprend une tige mobile en translation entre deux positions selon un axe Y, à l'intérieur d'un fourreau. Le fourreau est fixé sur un support 31 solidaire du bras fixe 27. La tige présente en son extrémité une forme sphérique coopérant avec une empreinte sphérique 32 aménagée dans le bras mobile 28. La course de la tige entre ses deux positions définie le débattement du bras mobile entre la position sécurisée et la position opérationnelle. Par défaut, par exemple lorsque l'articulation n'est pas alimentée électriquement, la tige est maintenue par l'effet du ressort dans sa position la plus étendue. A l'inverse, lorsque l'articulation est alimentée, l'actionneur peut être commandé pour rétracter la tige dans le fourreau en exerçant une force contrant l'effet ressort. Divers modes de réalisation de l'actionneur linéaire sont envisageables, notamment un actionneur linéaire pilotable par électro-aimant.

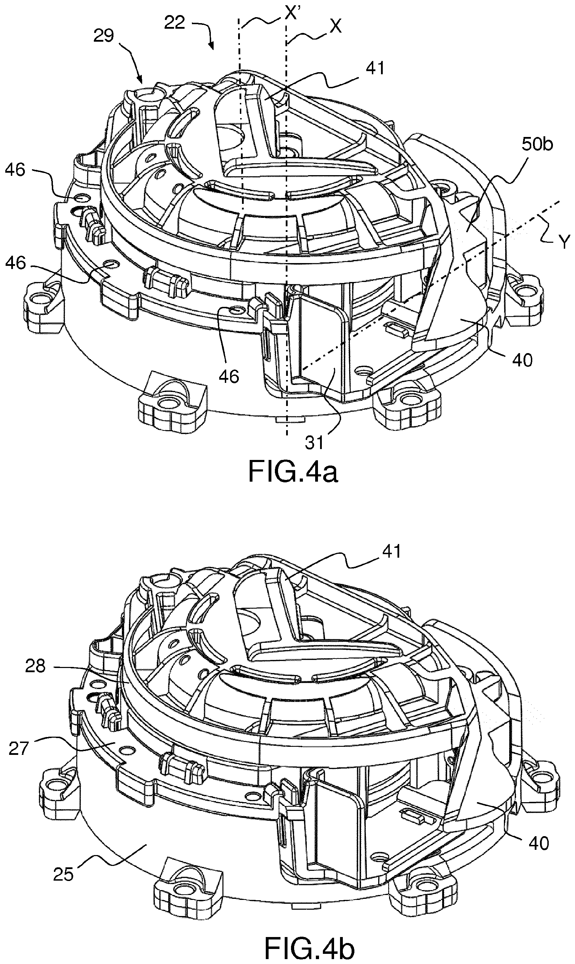

L'articulation comprend aussi des moyens pour déplacer manuellement le frein pour libérer le mouvement de rotation des deux membres. En particulier, un plan incliné 40 est aménagé sur le bras mobile, à proximité de sa seconde extrémité, de sorte qu'un outil déplacé parallèlement à l'axe X de rotation de l'arbre, et contre ce plan incliné 40, peut déplacer le bras mobile de la position sécurisée vers la position opérationnelle, en contrant l'effet ressort. Un second plan incliné 41, visible sur les figures 4a et 4b, est aussi aménagé à proximité du centre le forme en demi-lune du bras mobile. En pratique, l'articulation motorisée représentée sur les figures est intégrée sur le robot, à l'intérieur d'une enveloppe extérieure représentée sur les figures 1a et 1b conférant l'aspect esthétique extérieur du robot. Avantageusement, l'enveloppe extérieure comprend un orifice aménagée en regard du plan incliné de l'articulation, permettant l'insertion d'une clé adaptée pour libérer le frein et permettre de plier ou déplier manuellement les membres articulés.

Selon un aspect de l'invention, la sécurisation de l'articulation consiste donc à doter le moteur d'entrainement d'un mécanisme de frein activé par défaut au moyen d'un mécanisme à ressort, et de moyens pour désactiver le mécanisme de frein en contrant le mécanisme à ressort. Ainsi, l'articulation se bloque en cas de coupure d'alimentation de l'articulation, liée à une perte de charge batterie, un crash informatique, ou un arrêt d'urgence volontaire. Les moyens pour désactiver le mécanisme de frein comprennent des moyens pilotables de manière électronique, c'est le rôle de l'actionneur, et des moyens manuels, c'est le rôle des plans inclinés.

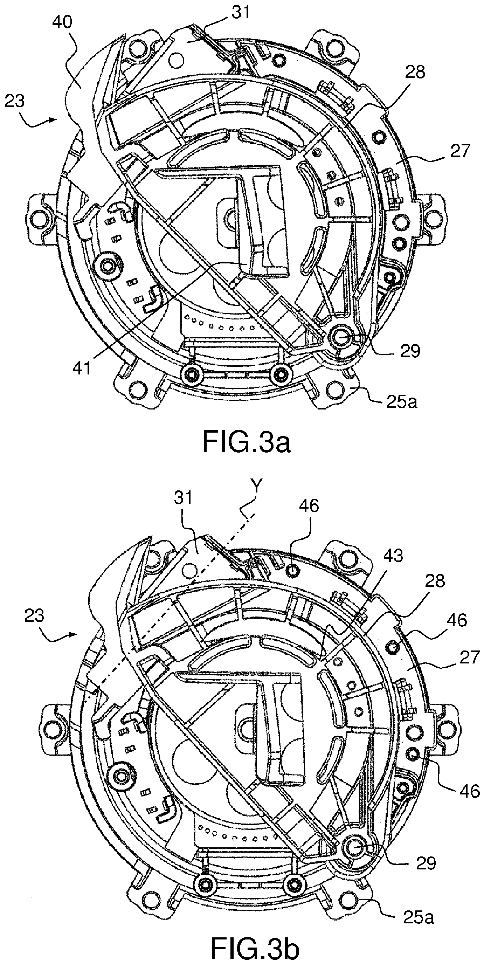

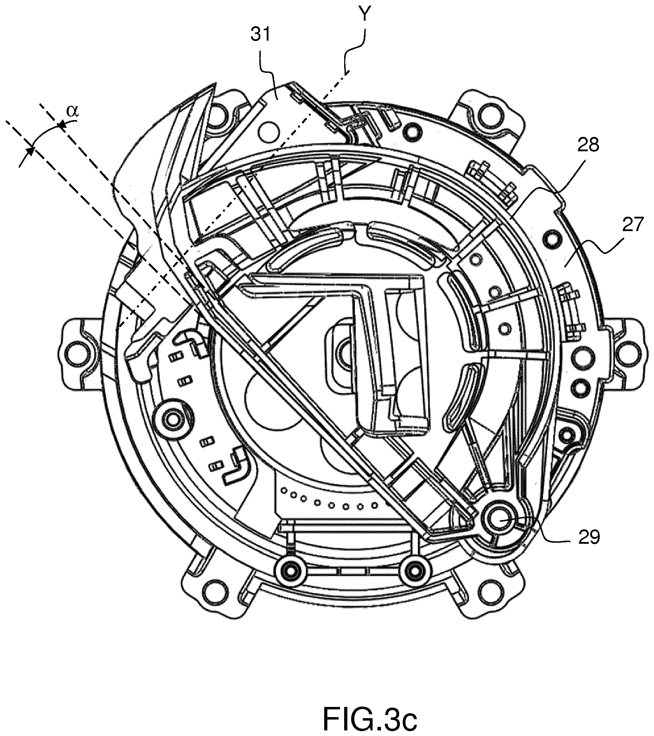

Les **figures 3a, 3b** **et** **3c** représentent en vue de dessus l'exemple d'articulation sécurisée, respectivement dans la position sécurisée, la position opérationnelle, et dans les deux positions superposées. Dans l'exemple représenté, le diamètre du socle moteur est d'environ 90 mm, la hauteur de l'articulation est d'environ 40 mm. En position sécurisée, le bras mobile 28 vient plaquer le patin en élastomère contre la cloche moteur 26. La forme en demi-lune du bras mobile est avantageuse. Elle permet d'épouser la forme de la cloche mobile de sorte que le patin élastomère peut être mis en contact avec la cloche le long d'une section radiale de l'arbre. Le patin n'est pas visible sur les figures, son emplacement est représenté au moyen du repère 43. Typiquement, un patin sensiblement rectangulaire d'environ 15 mm de hauteur et de largeur est retenu. La forme en demi-lune permet également de sécuriser l'articulation dans un encombrement réduit. Typiquement, une course de 2.5 mm de l'actionneur linéaire, correspondant à un angle α d'environ 4 degrés, sépare la position sécurisée de la position opérationnelle. Notons également que l'articulation est avantageusement destinée à être reliée aux deux membres du robot de manière à ce que le bras mobile en forme de demi-lune soit positionné en partie supérieure de la cloche moteur. Ainsi configuré, la partie mobile du frein vient plaquer le patin, non seulement par effet ressort mais aussi de manière naturelle par effet de la gravité. En l'absence d'énergie et dans le cas d'un affaiblissement de la puissance des ressorts de rappel, l'articulation reste naturellement freinée par le patin.

L'articulation reste bloquée tant qu'un effort extérieur exercé entre la partie mobile et la partie fixe du moteur, reste inférieur à l'effort exercé sur le moteur par le frein. Lorsque l'effort appliqué entre la partie mobile et la partie fixe du moteur est supérieur à l'effort exercé par le frein, la partie mobile est entrainée en mouvement. L'effort de friction étant insuffisant pour immobiliser la cloche contre le patin, l'arbre glisse en rotation malgré le freinage exercé par le patin. La partie mobile est freinée mais non immobilisée. Autrement dit, le contact par friction entre le patin 43 et la cloche 26 permet de freiner sans obligatoirement arrêter la rotation de la cloche 26. Cette caractéristique permet au choix de freiner ou arrêter la cloche 26. Par ailleurs, le contact se fait par le bras mobile 28 en demi-lune, ce qui a pour effet technique d'épouser la forme de la cloche avec un meilleur contact et de sécuriser l'articulation dans un encombrement réduit.

Il est possible par un dimensionnement adapté du ressort et du patin de définir l'effort exercé sur le moteur par effet ressort. Autrement dit, le frein peut être configuré pour empêcher le mouvement de la partie mobile par rapport à la partie fixe jusqu'à un effort seuil prédéterminée ; un effort supérieur à cet effort seuil, exercé entre la partie mobile et la partie fixe générant un mouvement de la partie mobile par rapport à la partie fixe.

La capacité à ajuster la valeur de cet effort seuil est une caractéristique particulièrement avantageuse de l'invention. Il devient possible d'adapter le comportement de l'articulation en fonction des situations rencontrées. Dans le cas du robot humanoïde 10', l'effort seuil est déterminé de manière à ce que l'articulation reste bloquée en rotation tant que la partie haute du robot (incluant ici la cuisse 7b, le torse 2, les bras 3 et la tête 1) est à l'intérieur d'un cône d'axe vertical et d'angle de l'ordre de 10 degrés. En dehors de ce cône, l'effort exercé sur l'articulation par effet de la gravité de la partie haute du robot est supérieur à l'effort seuil et les membres sont entrainés en rotation ; l'articulation étant simplement freinée. La vitesse de la rotation freinée est avantageusement configurable par le dimensionnement du patin et du ressort. Le mouvement de rotation freinée est également avantageux pour sécuriser l'articulation, en évitant la rupture de composants exposés à un effort important. Autrement dit, cela permet de préserver la mobilité des pièces intervenant dans la chaîne d'engrenage suivant le moteur. Cette mobilité permet par exemple de supporter un choc violent sur une articulation mettant en oeuvre le système de freinage dans sa position frottante, puisque les engrenages pourrons tourner, même lentement, afin de dissiper l'energie du choc. Dans l'hypothèse inverse d'un blocage de l'articulation par des moyens mécaniques indépendants de l'effort exercé, la force d'impact en cas de chute ou de choc violent serait répercutée sur toute la chaine d'entrainement de l'articulation, entrainant *in fine* la rupture des composants les plus fragiles, par exemple du moteur ou du dispositif à engrenages.

Cette mise en oeuvre d'un frein agissant par friction est avantageuse car elle définie deux plages d'utilisation, une première plage dans laquelle l'articulation est bloquée, tout effort exercé entre les membres n'entrainant pas de mouvement de l'articulation; et une seconde plage dans laquelle un effort exercé entre les membres entraine le mouvement des membres ; l'articulation étant freinée.

Les **figures 4a et 4b** représentent selon une seconde vue en perspective l'exemple d'articulation sécurisée, respectivement dans la position sécurisée et la position opérationnelle. Cette seconde vue illustre l'implantation de l'actionneur linéaire sur le socle moteur 25, à proximité de la seconde extrémité 50b du bras mobile 28. L'actionneur linéaire comprend un fourreau, fixé sur le support 31 aménagé dans le bras fixe 27, et une tige dont une extrémité sphérique coopère avec l'empreinte sphérique 32 aménagée dans le bras mobile pour former une liaison rotule. En l'absence d'alimentation électrique ou de commande de l'actionneur, la tige est maintenue en position rétractée par l'effet du ressort. Le déplacement de la tige en translation selon l'axe Y, commandé par l'actionneur linéaire, permet de contrer l'effet ressort et de libérer l'arbre de l'emprise du frein.

Avantageusement, le bras fixe 27 et le bras mobile 28 sont constitués d'un matériau thermoplastique chargé en fibre de verre, préférentiellement de type PA66-GF35. Divers composants, comme par exemple le support 31, peuvent être rapportés sur le bras mobile par un procédé de type surmoulage. Le patin peut être constitué d'un matériau élastomère à base de polyuréthane. Le patin est préférentiellement fixé au bras mobile par un procédé de type bi-injection, permettant une cohésion moléculaire adaptée aux efforts pouvant être exercés sur le patin.

Avantageusement, l'ensemble comprenant le bras fixe, le bras mobile, le patin, le ressort hélicoïdal et l'actionneur est assemblé dans une première étape. L'ensemble pré-assemblé est ensuite monté sur le socle moteur 25. A cet effet, le socle moteur et le bras fixe comprennent des moyens permettant de prépositionner l'ensemble par rapport au moteur, avant fixation au moyen des trois empreintes de fixation 46 aménagées dans le bras fixe et le socle moteur.

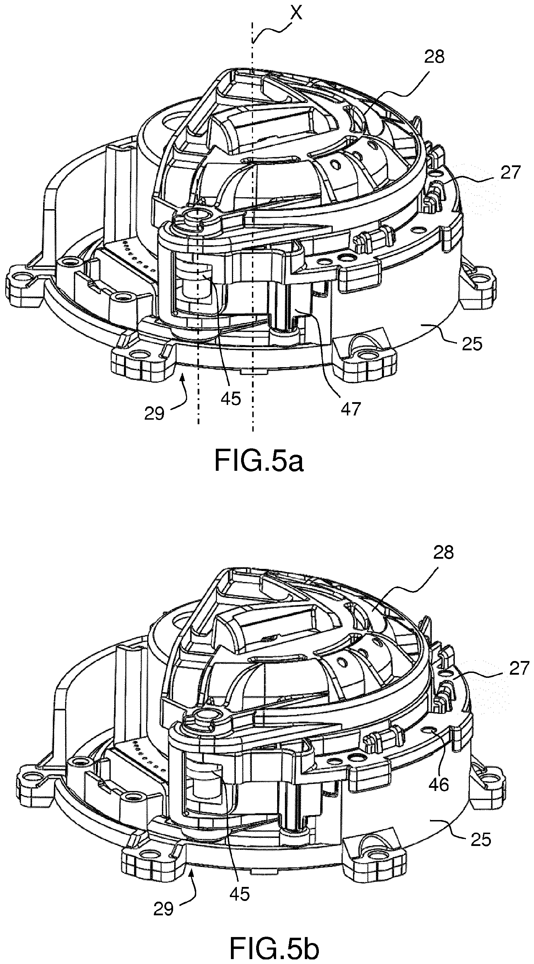

Les **figures 5a et 5b** représentent selon une troisième vue en perspective l'exemple d'articulation sécurisée, respectivement dans la position sécurisée et la position opérationnelle. Cette dernière vue en perspective montre le détail de la liaison pivot 29 entre le bras fixe 27 et le bras mobile 28. Le ressort 45 est enroulé autour de l'axe X' et prend appui contre une surface du bras mobile et une surface du bras fixe, de sorte à exercer un effort tendant à écarter le bras fixe et le bras mobile.

Avantageusement, le bras fixe comprend aussi des moyens 47 de reprise d'effort, entre le socle moteur et le bras fixe, permettant de répercuter l'effort exercé par le ressort sur le bras fixe vers le socle moteur.

Il est aussi envisagé de fixer des moyens de mesure de la position du bras mobile, l'information de position mesurée étant transmise à une unité de contrôle électronique pour le pilotage de l'articulation motorisée. Il est notamment envisagé des moyens de mesure optique. Pour cela, le bras mobile comprend une extrémité 48, visible sur la figure 2b, configurée pour venir intercepter - dans la position sécurisée uniquement - un faisceau optique d'axe parallèle à l'axe X.

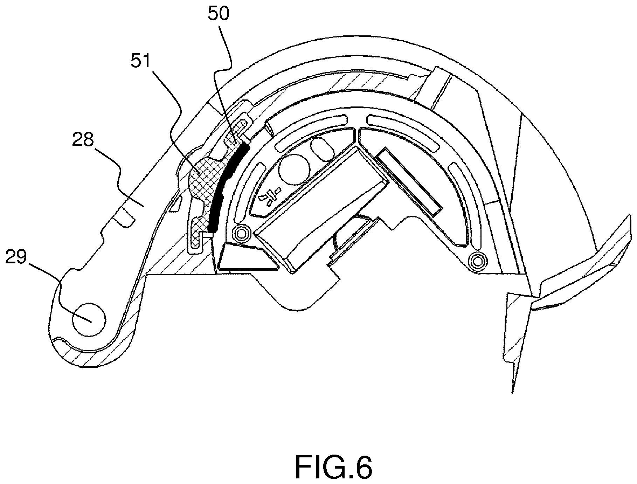

La **figure 6** représente en vue de dessous un second exemple d'articulation sécurisée. Ce second exemple d'articulation présente de nombreuses similarités avec le premier exemple déjà décrit. Comme précédemment. le frein comprend un bras fixe solidaire du socle et un bras mobile 28 relié au bras fixe par une liaison pivot 29. Sur la figure 6, seul le bras mobile 28 du frein est représenté. La définition et le principe de fonctionnement des autres composants, comme le moteur, l'actionneur ou le bras fixe du frein, ne sont pas repris en détail de manière systématique.

Ce second exemple d'articulation se distingue du premier exemple par la définition du patin venant en contact de la cloche moteur. Dans ce second exemple, un patin 50 destiné à venir en contact de la cloche moteur pour freiner cette dernière, est monté sur une plaquette 51 montée sur rotule sur le bras mobile 28. La plaquette 51 présente une forme spécifique configurée pour fluer sous l'action combinée des forces de frottement tangentiel statique et dynamique et de la pression. Cette déformation étant possible de manière symétrique, quelque soit le sens de rotation de la cloche moteur.

## Revendications

1. Articulation motorisée sécurisée destinée à être montée entre un premier et un second membres (7a, 7b) d'un robot à caractère humanoïde (10'), comprenant :
• un moteur (21) comprenant une partie fixe (25) destinée à être reliée au premier membre (7a), et une partie mobile (26) pouvant être entrainée en mouvement par rapport à la partie fixe (25) et destinée à être reliée au second membre (7b),
• un frein (22) capable d'exercer un effort sur la partie mobile (26) du moteur (21) par effet ressort, pour empêcher le mouvement de la partie mobile (26) par rapport à la partie fixe (25),
• un actionneur (23) capable de déplacer le frein (22) en s'opposant à l'effet ressort, de sorte à libérer la partie mobile (26) du moteur (25) de l'effort du frein (22) et permettre au moteur (21) d'entrainer en mouvement la partie mobile (26) par rapport à la partie fixe (25),
**caractérisée en ce que** le moteur (21) est un moteur rotatif électrique, la partie fixe comprenant un socle (25) et la partie mobile comprenant un arbre entrainable en rotation par rapport au socle (25) et une cloche (26) solidaire de l'arbre, et le frein (22) comprend un patin (50) pouvant être déplacé entre une position sécurisée, dans laquelle le patin en contact de la cloche (26) exerce un effort sur la cloche (26) pour empêcher par friction la rotation de l'arbre par rapport au socle (25), et une position opérationnelle, dans laquelle le patin est séparé de la cloche (26), libérant l'arbre de l'effort du frein (22),
et **en ce que** la cloche (26) est constituée d'un matériau métallique et est de forme sensiblement cylindrique, et le patin (50) est constitué d'un matériau élastomère et est configuré pour venir en contact de la cloche (26) le long d'une section radiale de la cloche (26).

2. Articulation selon la revendication 1, dont le frein (22) est configuré pour empêcher le mouvement de la partie mobile (26) par rapport à la partie fixe (25) jusqu'à un effort seuil prédéterminée ; un effort supérieur audit effort seuil exercé entre la partie mobile (26) et la partie fixe (25) du moteur (21) générant un mouvement de la partie mobile (26) par rapport à la partie fixe (25).

3. Articulation selon l'une des revendications précédentes, dans laquelle le frein comprend :
• un bras fixe (27) solidaire du socle (25),
• un bras mobile (28) relié par une première extrémité au bras fixe (27) au moyen d'une liaison pivot (29) d'axe (X') sensiblement parallèle à l'axe principal (X) de l'arbre, le patin étant fixé sur le bras mobile (28),
• un ressort hélicoïdal (45) enroulé autour de l'axe (X') de la liaison pivot et prenant appui d'une part sur le bras fixe (27) et d'autre part sur le bras mobile (28) de manière à exercer un effort tendant à écarter le bras mobile (28) et le bras fixe (27).

4. Articulation selon l'une des revendications 1 ou 2, dans laquelle le frein comprend :
• un bras fixe (27) solidaire du socle (25),
• un bras mobile (28) relié par une première extrémité au bras fixe (27) au moyen d'une liaison pivot (29) d'axe (X') sensiblement parallèle à l'axe principal (X) de l'arbre, le patin (50) étant fixé sur une plaquette (51) montée sur rotule sur le bras mobile (28),
• un ressort hélicoïdal (45) enroulé autour de l'axe (X') de la liaison pivot et prenant appui d'une part sur le bras fixe (27) et d'autre part sur le bras mobile (28) de manière à exercer un effort tendant à écarter le bras mobile (28) et le bras fixe (27).

5. Articulation selon la revendication 3 ou 4, dans laquelle l'actionneur (23) est un actionneur linéaire comprenant un fourreau solidaire du socle (25) et une tige, mobile en translation dans le fourreau, et reliée à une seconde extrémité du bras mobile (28); l'actionneur linéaire étant configuré pour permettre de déplacer le bras mobile (28) en rotation par rapport au bras fixe (27), en s'opposant à l'effet ressort, par translation de la tige dans le fourreau.

6. Articulation selon la revendication 5, dans laquelle le bras mobile (28) présente une forme en demi-lune entre sa première et sa seconde extrémités, formant un demi-couvercle recouvrant partiellement la cloche (26).

7. Articulation selon l'une des revendications précédentes, comprenant un dispositif à engrenages entrainé par la partie mobile (26) du moteur (21) et destiné à être relié au second membre (7b).

8. Articulation selon l'une des revendications précédentes, comprenant des moyens (40, 41) pour permettre de déplacer le frein (22) par une intervention manuelle.

9. Articulation selon l'une des revendications précédentes, comprenant des moyens de mesure (48) capable de détecter un déplacement du frein (22).

10. Robot à caractère humanoïde comprenant une articulation motorisée (12, 13) selon l'une des revendications précédentes.

11. Robot selon la revendication 10, comprenant un membre s'apparentant à une cuisse (7b) et un membre s'apparentant à un torse (2), articulés par une articulation (13) selon l'une des revendications 1 à 10.

12. Robot selon la revendication 10 ou 11, comprenant un membre s'apparentant à une jambe (7a) et un membre s'apparentant à une cuisse (7b), articulés par une articulation (12) selon l'une des revendications 1 à 10.

## Patentansprüche

1. Motorgetriebenes sicheres Gelenk zum Montieren zwischen einem ersten und einem zweiten Element (7a, 7b) eines Roboters mit humanoidem Charakter (10'), das Folgendes umfasst:
• einen Motor (21), der einen festen Teil (25) zum Verbinden mit dem ersten Element (7a) und einen beweglichen Teil (26) umfasst, der mit Bezug auf den festen Teil (25) in Bewegung versetzt werden kann und zum Verbinden mit dem zweiten Element (7b) bestimmt ist,
• eine Bremse (22), die eine Kraft auf den beweglichen Teil (26) des Motors (21) durch Federwirkung ausüben kann, um die Bewegung des beweglichen Teils (26) mit Bezug auf den festen Teil (25) zu verhindern,
• einen Aktuator (23), der die Bremse (22) gegen die Federwirkung bewegen kann, um den beweglichen Teil (26) des Motors (25) von der Kraft der Bremse (22) freizusetzen und zuzulassen, dass der Motor (21) den beweglichen Teil (26) mit Bezug auf den festen Teil (25) in Bewegung versetzt,
**dadurch gekennzeichnet, dass** der Motor (21) ein elektrischer Drehmotor ist, wobei der feste Teil einen Sockel (25) umfasst und der bewegliche Teil eine Welle, die mit Bezug auf den Sockel (25) in Drehung versetzt werden kann, und eine Glocke (26) einstückig mit der Welle umfasst, und die Bremse (22) einen Gleitschuh (50) umfasst, der zwischen einer sicheren Position, in der der Gleitschuh in Kontakt mit der Glocke (26) eine Kraft auf die Glocke (26) ausübt, um die Rotation der Welle mit Bezug auf den Sockel (25) durch Reibung zu verhindern, und einer Betriebsposition bewegt werden kann, in der der Gleitschuh von der Glocke (26) getrennt ist und die Welle von der Kraft der Bremse (22) freisetzt,
und dadurch, dass die Glocke (26) aus einem metallischen Material gebildet ist und eine im Wesentlichen zylindrische Form hat, und der Gleitschuh (50) aus einem elastomeren Material gebildet und zum Kontaktieren der Glocke (26) entlang einem radialen Abschnitt der Glocke (26) konfiguriert ist.

2. Gelenk nach Anspruch 1, dessen Bremse (22) zum Verhindern der Bewegung des beweglichen Teils (26) mit Bezug auf den festen Teil (25) bis zu einer vorbestimmten Schwellenkraft konfiguriert ist; wobei eine Kraft, die größer ist als die Schwellenkraft, die zwischen dem beweglichen Teil (26) und dem festen Teil (25) des Motors (21) ausgeübt wird, eine Bewegung des beweglichen Teils (26) mit Bezug auf den festen Teil (25) erzeugt.

3. Gelenk nach einem der vorherigen Ansprüche, wobei die Bremse Folgendes umfasst:
• einen festen Arm (27) einstückig mit dem Sockel (25),
• einen beweglichen Arm (28), der durch ein erstes Ende mit dem festen Arm (27) über eine Drehverbindung (29) einer Achse (X') im Wesentlichen parallel zur Hauptachse (X) der Welle verbunden ist, wobei der Gleitschuh an dem beweglichen Arm (28) befestigt ist,
• eine Schraubenfeder (45), die um die Achse (X') der Drehverbindung gewickelt ist und einerseits an dem festen Arm (27) und andererseits an dem beweglichen Arm (28) zur Anlage kommt, um eine Kraft auszuüben, die dazu neigt, den beweglichen Arm (28) und den festen Arm (27) voneinander zu beabstanden.

4. Gelenk nach Anspruch 1 oder 2, bei dem die Bremse Folgendes umfasst:
• einen festen Arm (27) einstückig mit dem Sockel (25),
• einen beweglichen Arm (28), der mit einem ersten Ende am festen Arm (27) mittels einer Drehverbindung (29) der Achse (X') im Wesentlichen parallel zur Hauptachse (X) der Welle verbunden ist, wobei der Gleitschuh (50) an einer Platte (51) befestigt ist, montiert an einem Kugelgelenk am beweglichen Arm (28),
• eine Schraubenfeder (45), die um die Achse (X') der Drehverbindung gewickelt ist und einerseits an dem festen Arm (27) und andererseits an dem beweglichen Arm (28) zur Anlage kommt, um eine Kraft auszuüben, die dazu neigt, den beweglichen Arm (28) und den festen Arm (27) voneinander zu beabstanden.

5. Gelenk nach Anspruch 3 oder 4, bei dem der Aktuator (23) ein Linearaktuator ist, der eine Hülse einstückig mit dem Sockel (25) und einen Stab umfasst, in der Hülse translational beweglich, und mit einem zweiten Ende des beweglichen Arms (28) verbunden ist; wobei der Linearaktuator zum Zulassen einer Bewegung des beweglichen Arms (28) in Rotation mit Bezug auf den festen Arm (27) gegen die Federwirkung durch Translation des Stabs in der Hülse konfiguriert ist.

6. Gelenk nach Anspruch 5, bei dem der bewegliche Arm (28) eine Halbmondform zwischen seinem ersten und seinem zweiten Ende hat, um eine halbe Abdeckung zu bilden, die die Glocke (26) teilweise bedeckt.

7. Gelenk nach einem der vorherigen Ansprüche, das eine Zahnradvorrichtung umfasst, die von dem beweglichen Teil (26) des Motors (21) mitgenommen wird und zum Verbinden mit dem zweiten Element (7b) bestimmt ist.

8. Gelenk nach einem der vorherigen Ansprüche, das Mittel (40, 41) umfasst, um eine Bewegung der Bremse (22) durch manuelle Betätigung zuzulassen.

9. Gelenk nach einem der vorherigen Ansprüche, das Messmittel (48) umfasst, die eine Bewegung der Bremse (22) erkennen können.

10. Roboter mit humanoidem Charakter, der ein motorgetriebenes Gelenk (12, 13) nach einem der vorherigen Ansprüche umfasst.

11. Roboter nach Anspruch 10, der ein Element umfasst, das einem Oberschenkel (7b) ähnelt, und ein Element, das einem Torso (2) ähnelt, durch ein Gelenk (13) nach einem der Ansprüche 1 bis 10 angelenkt.

12. Roboter nach Anspruch 10 oder 11, der ein Element umfasst, das einem Unterschenkel (7a) ähnelt, und ein Element, das einem Oberschenkel (7b) ähnelt, angelenkt durch ein Gelenk (12) nach einem der Ansprüche 1 bis 10.

## Claims

1. A secured motorized articulation intended to be mounted between a first and a second limbs (7a, 7b) of a humanoid-type robot (10'), comprising:
• a motor (21) comprising a fixed part (25) intended to be linked to the first limb (7a), and a mobile part (26) that can be moved relative to the fixed part (25) and intended to be linked to the second limb (7b),
• a brake (22) capable of exerting a force on the mobile part (26) of the motor (21) by spring effect, to prevent the movement of the mobile part (26) relative to the fixed part (25),
• an actuator (23) capable of displacing the brake (22) by opposing the spring effect, so as to release the mobile part (26) of the motor (25) from the force of the brake (22) and allow the motor (21) to move the mobile part (26) relative to the fixed part (25),
**characterized in that** the motor (21) is a rotary electric motor, the fixed part comprising a base pad (25) and the mobile part comprising a shaft that can be driven in rotation relative to the base pad (25) and a bell housing (26) secured to the shaft, and the brake (22) comprises a shoe (50) that can be displaced between a secured position, in which the shoe in contact with the bell housing (26) exerts a force on the bell housing (26) to prevent, by friction, the rotation of the shaft relative to the base pad (25), and an operational position, in which the shoe is separated from the bell housing (26), releasing the shaft from the force of the brake (22),
and **in that** the bell housing (26) consists of a metal material and is of substantially cylindrical form, and the shoe (50) consists of an elastomer material and is configured to come into contact with the bell housing (26) along a radial section of the bell housing (26).

2. The articulation as claimed in claim 1, of which the brake (22) is configured to prevent the movement of the mobile part (26) relative to the fixed part (25) up to a predetermined threshold force, a force greater than said threshold force exerted between the mobile part (26) and the fixed part (25) of the motor (21) generating a movement of the mobile part (26) relative to the fixed part (25).

3. The articulation as claimed in one of the preceding claims, in which the brake comprises:
• a fixed arm (27) secured to the base pad (25),
• a mobile arm (28) linked by a first end to the fixed arm (27) by means of a pivot link (29) of axis (X') substantially parallel to the main axis (X) of the shaft, the shoe being fixed to the mobile arm (28),
• a helical spring (45) wound about the axis (X') of the pivot link and bearing on the one hand on the fixed arm (27) and on the other hand on the mobile arm (28) so as to exert a force tending to separate the mobile arm (28) and the fixed arm (27).

4. The articulation as claimed in one of claims 1 and 2, in which the brake comprises:
• a fixed arm (27) secured to the base pad (25),
• a mobile arm (28) linked by a first end to the fixed arm (27) by means of a pivot link (29) of axis (X') substantially parallel to the main axis (X) of the shaft, the shoe (50) being fixed to a pad (51) mounted on a ball joint on the mobile arm (28),
• a helical spring (45) wound about the axis (X') of the pivot link and bearing on the one hand on the fixed arm (27) and on the other hand on the mobile arm (28) so as to exert a force tending to separate the mobile arm (28) and the fixed arm (27).

5. The articulation as claimed in claim 3 or 4, in which the actuator (23) is a linear actuator comprising a sheath secured to the base pad (25) and a rod, translationally mobile in the sheath, and linked to a second end of the mobile arm (28), the linear actuator being configured to make it possible to displace the mobile arm (28) in rotation relative to the fixed arm (27), by opposing the spring effect, by translation of the rod in the sheath.

6. The articulation as claimed in claim 5, in which the mobile arm (28) has a half-moon form between its first and its second ends, forming a half-cover partially covering the bell housing (26).

7. The articulation as claimed in one of the preceding claims, comprising a gear device driven by the mobile part (26) of the motor (21) and intended to be linked to the second limb (7b).

8. The articulation as claimed in one of the preceding claims, comprising means (40, 41) for making it possible to displace the brake (22) by a manual intervention.

9. The articulation as claimed in one of the preceding claims, comprising measurement means (48) capable of detecting a displacement of the brake (22).

10. A humanoid-type robot comprising a motorized articulation (12, 13) as claimed in one of the preceding claims.

11. The robot as claimed in claim 10, comprising a limb like a thigh (7b) and a limb like a torso (2), articulated by an articulation (13) as claimed in one of claims 1 to 10.

12. The robot as claimed in claim 10 or 11, comprising a limb like a leg (7a) and a limb like a thigh (7b), articulated by an articulation (12) as claimed in one of claims 1 to 10.
